Europäisches Patentamt

**European Patent Office**

**Office européen des brevets**

(11) Publication number: **0 117 702**
A2

## EUROPEAN PATENT APPLICATION

(21) Application number: **84301092.7**

(22) Date of filing: **21.02.84**

(51) Int. Cl.³: **B 64 D 37/16, B 64 F 1/28**

(30) Priority: **25.02.83 US 469936**

(43) Date of publication of application: **05.09.84**
Bulletin 84/36

(84) Designated Contracting States: **AT BE CH DE FR GB IT LI LU NL SE**

(71) Applicant: **Brown, Albert W., 1207 Pembroke Lane, Newport Beach California 92660 (US)**

(72) Inventor: **Brown, Albert W., 1207 Pembroke Lane, Newport Beach California 92660 (US)**

(74) Representative: **Rushton, Ronald et al, SOMMERVILLE & RUSHTON 11 Holywell Hill, St. Albans Hertfordshire AL1 1EZ (GB)**

(54) **Aircraft under-wing fueling nozzle system.**

(57) A modular nozzle system particularly suitable for refueling aircraft fuel tanks includes a nozzle valve linkage mechanism which permits the nozzle body to have a shorter length than previous designs. The mechanism can be accommodated in a bearing which accepts a shaft connected to the valve. Nozzle length is further reduced by nesting the linkage in a concave sleeve valve in an adjacent pressure regulator section. The nozzle may include a mechanical fuse for releasing the connection between the nozzle body and a fuel tank upon the application of predetermined forces by means of spring biased detents in a collar around the nozzle. The nozzle may also include a swivel joint which facilitates positioning the nozzle for connection to a fuel tank. The nozzle may also include a quick disconnect assembly which facilitates connection of the nozzle to fuel supply lines. The system also may comprise an assembly fixture for assembling the mechanical fuse and a test fixture for testing the release force of the mechanical fuse.

AIRCRAFT UNDER-WING FUELING NOZZLE SYSTEM

Background of the Invention

This invention relates generally to dry break disconnect couplings for the transfer of liquids and gases in applications where quick attachment and detachment are required without loss of the medium being transferred. More particularly, this invention relates to fueling nozzles and valves for supplying fuel to aircraft fuel tanks of the type having a refueling adapter accessible from below the wing of an aircraft. Still more particularly, this invention relates to jet aircraft refueling nozzles or couplings that connect to a standard refueling adapter generally mounted inside the lower wing surface of the aircraft. The invention also relates to couplings and nozzles which connect to a fuel source which is generally below the surface of the ground.

In aircraft refueling operations, it is desirable that the nozzle be light in weight and easy to handle because of the weight of the hose and typical distances from the refueling adapters to the ground. Most refueling nozzles presently in use are excessively heavy and long, which makes such nozzles difficult to handle and causes excessive loads on the aircraft adapter when the end of the nozzle farthest from the adapter is subjected to side loads.

Most prior art aircraft refueling nozzles have the additional disadvantage that it is difficult to radially position them for connection to the aircraft with and without fuel pressure in the fuel line connected to the refueling nozzle.

In a typical application, a service vehicle is connected to the refueling hose to pump fuel into the aircraft fuel tanks. If by mistake the refueling nozzle were left connected to the aircraft adapter and the operator of the service vehicle attempted to drive the service vehicle away from the aircraft, the nozzle would separate from the aircraft, generally causing damage to both the aircraft and the servicing equipment. Such incidents often damage the aircraft refueling adapter so severely that fuel spills result; and the aircraft is removed from service for costly, time-consuming repairs. Attempting to drive the service vehicle away while the refueling nozzle is connected to the aircraft also often damages the refueling nozzle, requiring replacement or repair at great expense and inconvenience.

Another disadvantage with many prior art nozzles is their relative complexity and the trouble involved in repairing or replacing defective parts. There is therefore a need for a relatively simple design of nozzle of modular construction comprising components that can easily be replaced.

Therefore, there is also a need in the art for a relatively short, lightweight nozzle especially for aircraft refueling, which includes a mechanical fuse which causes the nozzle to break away from the aircraft refueling adapter upon the application of predetermined axial loads and side loads, which is easy to position with pressure in the line for connection to the aircraft and which is easy to reassemble after a separation of the mechanical fuse occurs and which in addition provides convenient modular accessories.

## Summary of the Invention

Accordingly, the present invention overcomes the disadvantages of prior art nozzles. The present invention provides a nozzle designed for controlling the axial position of the refueling valve to permit the construction of a nozzle, especially for refueling aircraft, considerably shorter in length than most previous aircraft refueling nozzles. The invention further includes an easily rotatable swivel which permits easy radial positioning of the nozzle for connection to an aircraft adapter with or without pressure in the fuel line connected to the nozzle. The aircraft refueling nozzle according to the invention may include a mechanical fuse which is non-fatiguing, permanently lubricated and sealed, non-adjustable repeatably testable for break-away force calibration, and easy to reassemble for reuse after a separation occurs. The invention further includes a test unit for verifying that the refueling nozzle operates with predetermined side and longitudinal break-away forces. The nozzle may include a quick disconnect assembly which permits easy attachment and detachment from different types of hose end connectors to provide a modular structure for receiving modular accessories, such as pressure regulators or dry-break hose end connectors.

More particularly, one embodiment of the invention provides a nozzle assembly, particularly for attachment to a fuel supply line to supply fuel to a fuel tank such as an aircraft fuel tank and comprising:

(a) a nozzle body comprising an inlet end and an outlet end;

a nozzle collar adapter connected to said outlet end for connecting said nozzle assembly to said fuel tank; and

a mechanical fuse for permitting separation of said nozzle collar adapter from said nozzle body upon application of predetermined release load to said nozzle assembly;

(b) a nozzle valve, for controlling the flow of said fuel from said nozzle assembly;

a nozzle valve shaft connected to said valve and axial to said nozzle body; and

a sleeve bearing through which said shaft extends, said bearing having a slot therein; and

a linkage for controlling the axial position of said shaft, said linkage comprising a reciprocable connecting link movable within said slot as said valve shaft moves axially relative to said nozzle body;

(c) a pressure regulator comprising a housing having an inlet end and an outlet end, said outlet end being connected to said inlet end of said nozzle body;

a valve mounted in said pressure regulator housing, said valve being movable between an open position and a closed position in response to changes in fluid pressure in said nozzle assembly to control the flow rate of fuel through said housing and to control the fluid pressure in said nozzle body; and

means for biasing said pressure regulator valve towards said open position with a predetermined force; and

(d) a coupling, for connection to or disconnection from said fuel supply line, said coupling comprising first and second generally tubular sections rotatable with respect to each other for said connection and disconnection, said coupling further comprising means for selectively preventing said rotation and consequently said disconnection.

The nozzle for this invention may comprise any combination of features (a), (b), (c) and (d) above. Typically these features are connected together in modular fashion with (b) upstream of (a) and (c) upstream of (b) and (d) upstream of (c). A particularly preferred combination is (b), (c), (d), i.e. a nozzle comprising the linkage, pressure regulator and coupling features described herein.

In preferred embodiments including the mechanical fuse feature, the nozzle collar adapter forms one or more cavities around the outlet and of the nozzle body, to contain a plurality of detents which bear against a retaining surface around the nozzle. The detents are urged against that surface by biasing means, such as springs inside and outside the detents, which, in combination with frictional force between the detents and that surface, provide a predetermined resistive force to be overcome by the release load causing the detents to ride over the retaining surface and thereby allow separation of the nozzle collar adapter from the nozzle. Preferably, the detents have a generally cylindrical shape with a tapered end for bearing against the retaining surface. The retaining surface may be a wire located in a groove around the nozzle collar. The diameter of the wire may be chosen to vary the separation resistance.

In preferred embodiments with respect to the nozzle valve shaft linkage, the connecting link is connected to an eccentric link which, in turn, is connected to means for rotating the eccentric link, such as a crank shaft connected to an external crank handle, to move the nozzle valve shaft within its bearing to control the position of the valve.

Preferably, the connecting link includes a stopping surface for contacting the interior of the nozzle valve shaft bearing to limit movement of the valve shaft and consequently the nozzle valve.

Preferably, the pressure regulator valve comprises a sleeve valve having a concave end adjacent the nozzle body for nesting the nozzle valve linkage.

The pressure regulator may include a check valve, normally biased to a closed position, for relieving excess pressure in the regulator and nozzle when the pressure regulator valve is closed by venting fluid in the direction from the outlet end of the regulator to the inlet end of the regulator.

In the coupling embodiment, the tubular sections, or disconnect halves, are designed to permit rapid connection or disconnection from the source of fluid to be supplied by the nozzle. In particular the coupling is designed so that no component can become separated and lost. The first tubular section preferably has a plurality of lugs extending from its outer surface and the second tubular section has a plurality of lugs extending from its inner surface. The lugs are spaced apart so that the lugs of one section may pass between the lugs of the other section upon connection of the sections in a direction axial to the nozzle. The sections are then rotated with respect to each other for the lugs of one section to align with and engage the lugs of the other section to prevent disconnection in the axial direction. More preferably, rotation of these sections is prevented by a castellated sleeve slidably mounted around the first section and having a plurality of retaining lugs which, in a locking position of the sleeve, extend into spaces between the aligned lugs on the tubular sections to prevent their relative rotation. The sleeve may include slots for engaging corresponding projections on the first section to prevent relative rotation of the sleeve when in the locking portion. The second section may also comprise an external spring having a tang projecting into a space between the aligned lugs on the sections to retain the first section against rotation relative to the second section.

In an embodiment associated with the mechanical fuse feature, the invention provides a fixture for assembling a nozzle in which the fuse comprises a plurality of spring-biased detents mounted in a detent ring. The fixture comprises:

a base, including means for holding the detent ring;

a detent washer for engaging the detents;

means for urging the detent washer toward the base to compress the detents; and

means for holding the detents in compression and for engaging the detents with a retainer in the nozzle.

The mechanical fuse may be assembled using this device by holding the detent ring on the base, placing the detent washer adjacent the detents and urging the detent washer toward the base to compress the detents. This holds the detents in compression and they can then be positioned adjacent a retainer in the nozzle and their compression released to allow the detents to engage the retainer in the nozzle.

The invention also provides a fixture for testing the mechanical fuse, comprising:

a test adapter shaped for locking engagement with the nozzle adapter portion; and

means for applying predetermined test forces to the test adapter to urge the adapter away from the flow control portion of the nozzle, thereby compressing the spring biased detents, without causing a complete separation of the nozzle adapter portion and the flow control portion.

The fuse may then be tested by engaging the test adapter with the nozzle adapter portion of the nozzle and applying predetermined test forces to the test adapter to urge the test adapter and the nozzle adapter portion away from the flow control portion to determine the force required to compress the detents, while limiting axial movement of the test adapter away from the flow control portion to prevent complete separation of the mechanical fuse.

Some preferred embodiments of the invention are illustrated by the accompanying drawings in which:

Figure 1 is a side elevational view of an aircraft refueling nozzle according to the invention with the nozzle poppet valve in the closed position;

Figure 2 is a side elevational view of an aircraft refueling nozzle similar to that shown in Figure 1, but with the nozzle poppet valve in the open position;

Figure 3 is a partial cross-sectional view of a refueling nozzle according to the invention incorporating a mechanical fuse arrangement and with the poppet valve in the closed position;

Figure 4 is a partial cross-sectional view taken along line 4-4 in Figure 3, but with the poppet valve in the open position and with the nozzle attached to connecting elements of an aircraft fuel tank;

Figure 5 is a cross-sectional view taken along line 5-5 in Figure 4;

Figure 6 is a cross-sectional view taken along line 6-6 in Figure 5;

Figure 7 is a perspective view of the nozzle poppet shaft bearing of Figures 3 and 4;

Figure 8 is a cross-sectional view taken along line 8-8 in Figure 3;

Figure 9 is a cross-sectional view of a nozzle assembly of the invention showing a pressure regulator assembly, a quick disconnect assembly and filter screen assembly;

Figure 10 is a perspective view of the integral piston and valve of the pressure regulator of Figure 9;

Figure 11 is an exploded view showing details of the disconnect assembly of Figure 9;

Figure 12 is a cross-sectional view, taken along the line 12-12 in Figure 9, showing two locking mechanisms for the quick disconnect assembly of Figure 9 with a wire tang both locked and unlocked;

Figure 13 is an exploded perspective view of the upper portion of the refueling nozzle of the invention positioned for connection to an aircraft refueling adapter;

Figures 14-16 are cross-sectional views showing the effects of side loads on a refueling nozzle according to the invention which incorporates a mechanical fuse;

Figure 17 is a partial cross-sectional view of a nozzle assembly according to the invention illustrating a modular pressure regulator attached to the nozzle body and a swiveling, angled fuel inlet flanged to accept a military-type disconnect and screen assembly;

Figure 18 is a side elevational view of a nozzle assembly of the invention which illustrates different modular handles which may be attached to the nozzle body;

Figure 19 is a partial cross-sectional view of a nozzle of the invention without a mechanical fuse;

Figure 20 is a cross-sectional view of a test fixture for testing the break-away forces of an aircraft refueling nozzle according to the invention which incorporates a mechanical fuse;

Figure 21 is a plan view of the test fixture of Figure 20.

Figure 22 is a plan view of an assembly fixture for assembling a mechanical fuse on a nozzle according to the invention; and

Figure 23 is a cross-sectional view taken along line 23-23 in Figure 22.

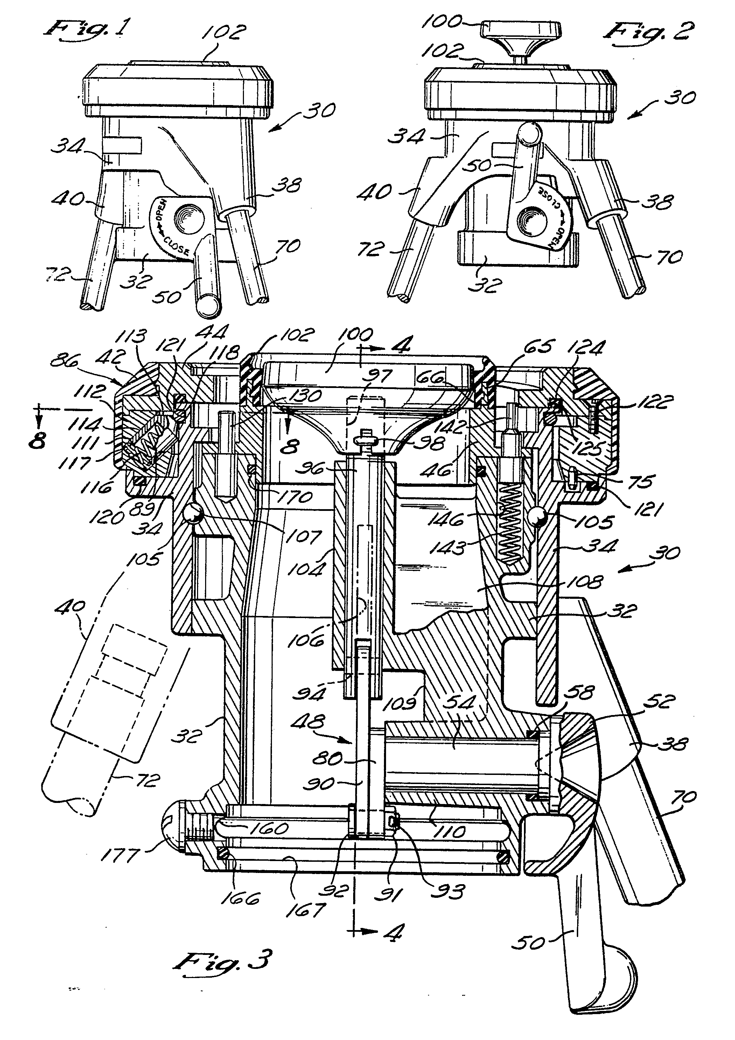

Referring to Figures 1 and 2, a fueling nozzle 30 of this invention comprises a generally cylindrical body 32, a collar 34, around body 32 and at one end thereof for attaching nozzle 30 to the vessel (not shown) into which fuel is to be supplied. Nozzle 30 further comprises a valve for regulating the delivery of fuel, such as axial poppet valve 100. As shown in Figure 2, valve 100 comprises a generally disc-shaped closure element surrounded by an annular seal 102 against which the closure element can bear to seal the nozzle. Figure 1 shows the poppet valve 100 in the closed position, and Figure 2 shows the poppet valve 100 in the open position.

As can be seen more clearly in Figure 3, resilient poppet seal 102 engages the valve 100 when the poppet valve 100 is closed to prevent fuel leakage. An annular seal support 46, preferably formed of a suitable metal, has a projection 65 embedded and bonded in an annular cavity 66 in the poppet seal 102. The seal support 46 is set in the outlet of nozzle 30 and engages an annular seal 170 around the inner surface of nozzle body 32 to prevent

-10-

fuel leakage out of the nozzle body 32. The nozzle collar 34 includes a pair of nozzle collar handle sockets 38 and 40 for receiving pair of handles 70 and 72, respectively, to the nozzle collar 34. The nozzle collar 34 is preferably formed of cast aluminum and the handles 70 and 72 are preferably formed of wrought aluminum. The handles 70 and 72 cooperate with the handle receivers 38 and 40, respectively, to provide durability and to eliminate the machining steps which would be necessary to assemble the nozzle 30 with separate handles.

Figure 18 illustrates that various handle grips may be attached to handles 70 and 72 in modular fashion. The wrought handles 70 and 72 are cast integral with the aluminum handle receivers 38 and 40 and are the same length. Either a long handle grip or a short handle grip may be installed in a modular fashion as shown and secured by a screw 74.

A crank handle 50 shown in Figures 1 and 2, is used for controlling the position of the poppet valve 100 and extends from the nozzle body 32. In use, nozzle 30 is connected to the fuel-receiving vessel (not shown) by attachment to collar 34 which is brought into locking engagement with the vessel by rotation by means of handles 70,72 into the position shown in Figure 2. In the position shown in Figure 1, crank handle 50 is prevented from rotating by abutment against collar 34 and therefore valve 100 cannot be opened in this position. In the position shown in Figure 2, however, after rotation of collar 34, crank 50 is free to rotate and open valve 100.

Figures 3 to 7 illustrate a linkage 48 for controlling axial movement of the nozzle poppet valve 100, by virtue of connection of the linkage 48 to crank handle 50 through crank shaft 54 and to valve 100 through nozzle poppet shaft 96.

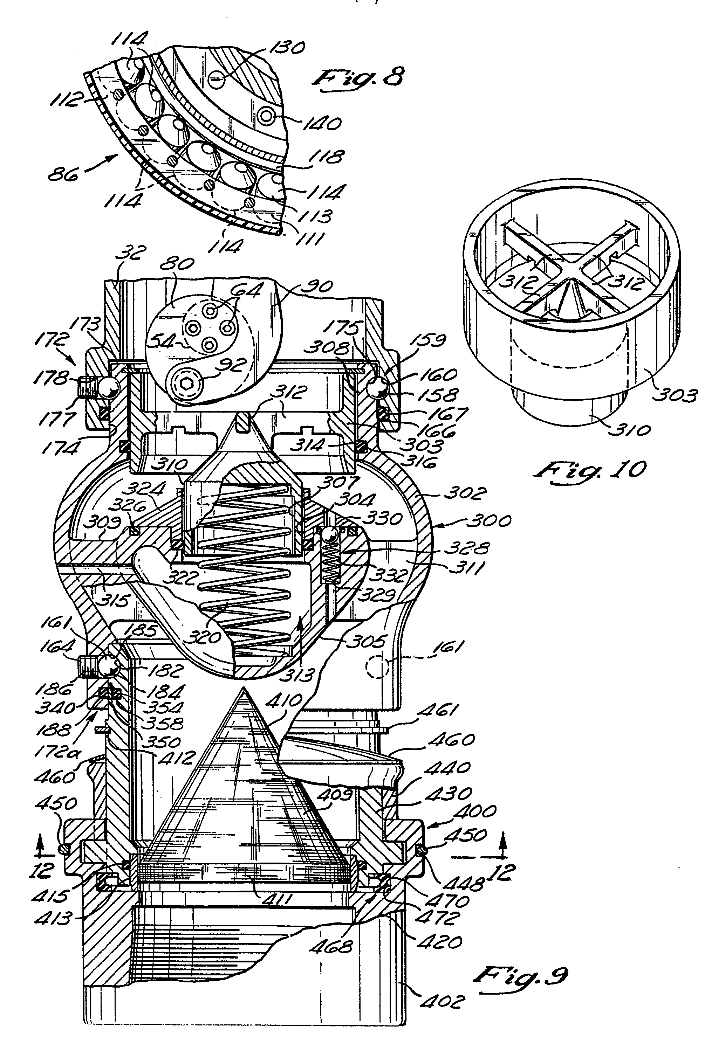

A support web 108 extending from an inner wall portion 82, best shown in Figures 5 and 7, of the nozzle body 32 has formed at its inner end a nozzle poppet bearing 104, which is preferably a sleeve bearing, in axial alignment with the nozzle body 32. A poppet shaft 96 projects through the bearing 104 into a threaded engagement recess 97 (Figure 3) in the lower portion of the nozzle poppet valve 100. A cotter pin 98 locks the poppet shaft 96 to the nozzle valve 100.

As shown in Figure 3, crank handle shaft 54 extends from the crank handle 50 through a crank handle shaft guide 110 formed in the lower portion of the support web 108. Suitable sealing means, such as an O-ring 58 prevents leakage of fuel between the crank handle shaft 54 and the crank handle shaft guide 110.

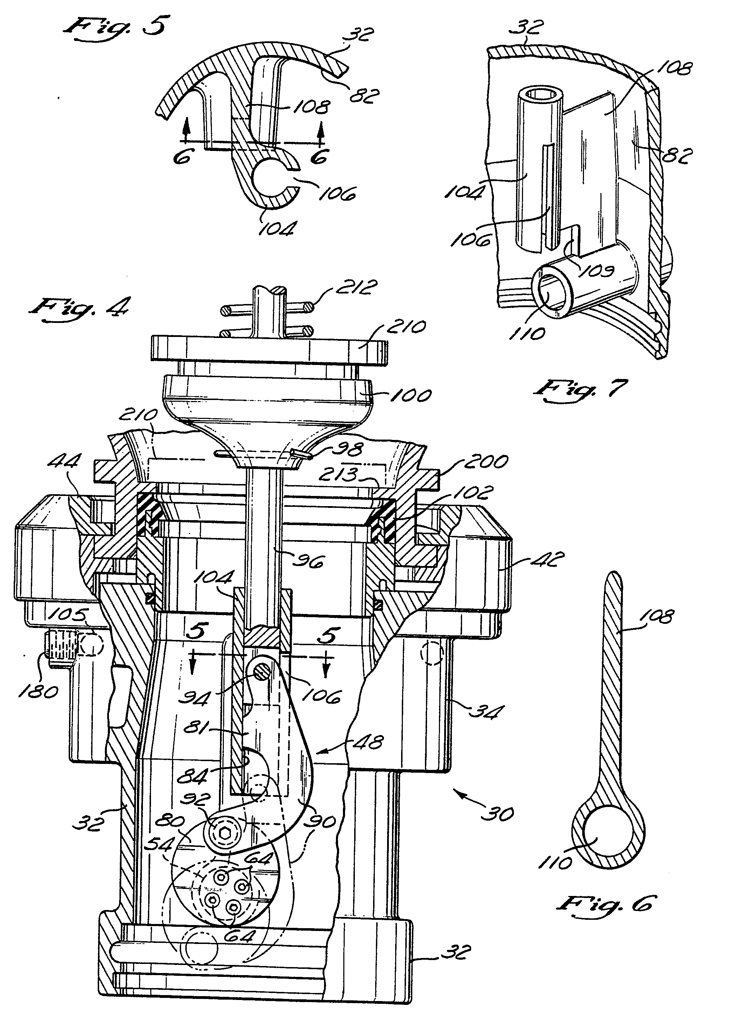

Referring to Figure 4, fastening means, such as a plurality of bolts 64, fastens the crank handle shaft 54 to an eccentric link 80. As shown, eccentric link 80 comprises a substantially circular plate in which bolts 64 are located offset from the center of the plate. A bolt 92 preferably threaded into the eccentric link 80, and similarly offset from the center of the plate, is locked by a lock nut 91 (Figure 3) and cotter pin 93 (Figure 3) to connect eccentric link 80 to the lower end of a connecting or crank link 90 and thereby to connect the eccentric link 80 to the nozzle poppet shaft 96 by means of a pin 94 at the upper end of connecting link 90. As shown in Figure 4, link 90 comprises a generally arcuate plate. A notch 109 (Figures 3 and 7) in the support web 108 permits the lock nut 91 to move without obstruction as the eccentric link 80 rotates about bolts 64.

Referring to Figures 3-7, a slot 106 in the nozzle poppet shaft bearing 104 permits the connecting link 90 to nest within the bearing 104 as the poppet valve 100 moves from the closed position to the open position. Figure 3 shows the poppet valve 100 in a closed position sealingly engaging the valve seal 102. Rotation of the crank handle shaft 54 rotates the eccentric link 80 counter clockwise from the position shown in phantom in Figure 4 to urge connecting link 90 upwards and therefore to raise poppet shaft 96 to open the poppet valve 100. This rotation of the eccentric link 80 lifts the connecting link 90, which exerts an axial force on the shaft 96 to lift the valve 100 and release the seal between the valve 100 and the seal 102. The connecting or crank link 90 moves into the slot 106, best shown in Figures 4, 5 and 7, as the eccentric link 80 rotates to advance the nozzle poppet valve 100 away from the nozzle poppet seal 102. As the connecting link 90 rises, it rotates about the pin 94 and the pin 92 to accommodate the movement. The rotation of the connecting link 90 about the pin 94 is counter clockwise, as viewed in Figure 4, during initial movement; and then the rotation reverses to clockwise as the pin 92 goes counter clockwise past the vertical center line of the eccentric link 80. A pad 81 projects from the crank link 90 to provide means for limiting the clockwise movement of the crank link 90 and consequently the upward movement of the nozzle poppet shaft 96 within the nozzle poppet shaft bearing 104. After the pad 81 contacts a stop 84 on the interior of the poppet shaft bearing 104, no further clockwise rotation of the crank link 90 about the pin 94 is possible.

When the nozzle poppet valve 100 is in the closed position, the connecting link 90 and eccentric link 80 are in the position shown in phantom in Figure 4. The pin 92 is again in an over-center position relative to the eccentric link 80. An upward force, such as from internal fuel pressure in the nozzle body 32, tending to open the nozzle poppet valve 100 tends to lift the crank link 90, which tends to rotate the crank shaft 54 clockwise because of the over-center position of the pin 92. This drives the connecting link 90 against the head of one of the bolts 64, which acts as a stop to prevent movement of the crank link 90, and thereby prevent unwanted opening of the poppet value 100.

Since the connecting link 90 moves within the slot 106 in the nozzle poppet shaft bearing 104 while controlling the position of the nozzle poppet valve 100, and due to the eccentricity of linkage 48, the nozzle body 32 may be made shorter in length than would otherwise be possible. The nozzle poppet shaft bearing 104 must have a length adequate to provide a sufficient bearing surface and to maintain the nozzle poppet shaft 96 and the nozzle poppet valve 100 in proper alignment within the nozzle body 32. Without the slot 106 in the nozzle poppet shaft bearing 104, the crank handle shaft 54 would have to be mounted to an eccentric link at a distance from the lower end of the nozzle poppet shaft bearing sufficient to permit the range of reciprocal movement of the connecting link necessary for opening and closing the nozzle poppet 100 valve.

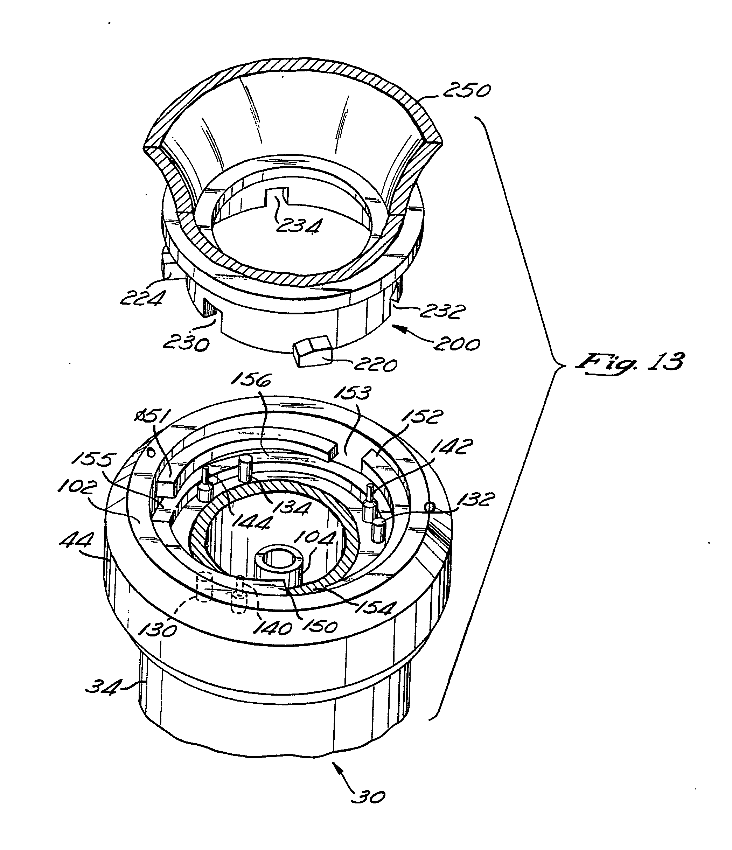

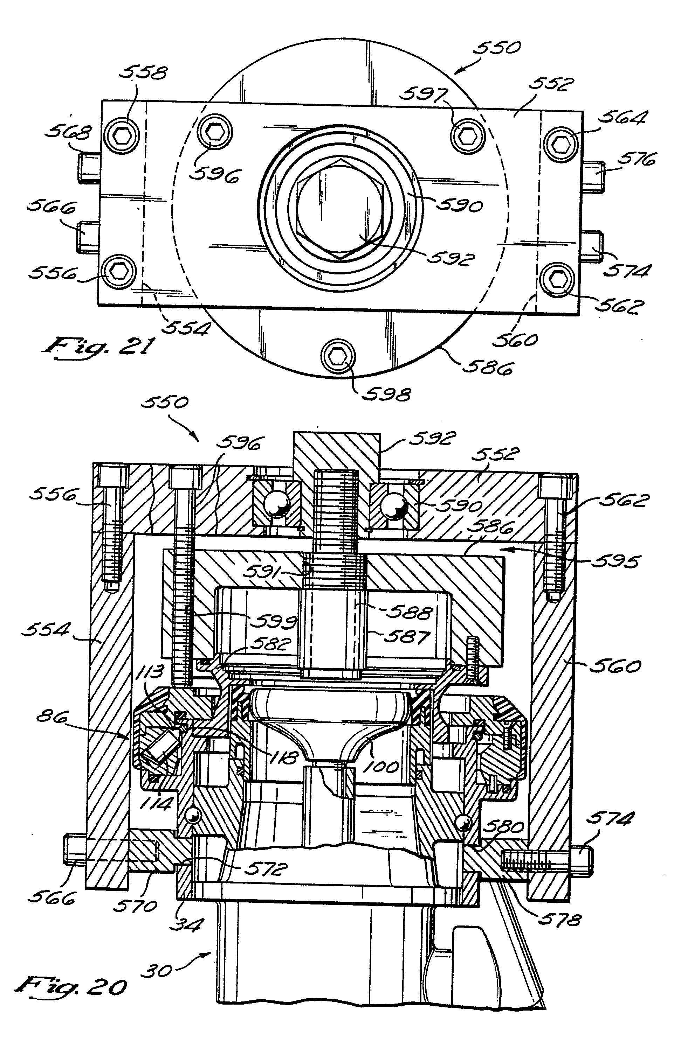

Referring to Figures 4 and 13, a nozzle collar adapter 44 is normally connected to the nozzle collar 34 of nozzle 30 for connection of the nozzle to an aircraft adapter 200. As will be described in more detail below, in those embodiments of the invention where the nozzle includes a mechanical fuse arrangement, collar adapter 44 is detachable from collar 34 so that the rest of the nozzle may break away from the aircraft adapter 200 under excessive loads. In those embodiments where the nozzle of the invention does not include such a fuse, for example as shown in Figure 19, the elements of the collar adapter for attachment to aircraft adapter 200 are not detachable from the nozzle.

Figure 13 illustrates the connection of the nozzle 30 to an aircraft fuel tank 250. The aircraft adapter 200 comprises a generally cylindrical element extending from the aircraft fuel tank 250 and includes a plurality of locking lugs, two of which are shown in Figure 13 such as lugs 220 and 224, which are flush with the end of adapter 200 exposed for connection with nozzle 30, and a plurality of indexing notches 230, 232 and 234 cut in that end of adapter 200.

-14-

The nozzle body 32 includes a plurality of upstanding indexing pins 130, 132 and 134, sized and spaced to fit into the indexing notches 230, 232 and 234 of adapter 200, are located in an annular cavity around valve 100 and its seal 102 and seal support 46 (Figure 3). Three arcuately spaced locking shelves 150, 151 and 152 formed on the inner wall of the nozzle collar adapter 44 define between them a plurality of locking slots 153, 154 and 155 spaced to receive the locking lugs 220 and 224 from adapter 200.

The nozzle collar 34 is rotatably mounted upon the nozzle body 32 on a plurality of ball bearings 105 mounted in a corresponding cavity 107 formed between the nozzle body 32 and the nozzle collar 34 (Figure 3). The locking lugs 220 and 224 may be engaged in the locking slots 153, 154 and 155. As shown in Figure 13 the locking shelves 150, 151 and 152 are have inclined surfaces to form a helical pathway for locking lugs 220 and 224. A lower shelf 156 on the nozzle collar adapter 44 below the locking shelves is non-helical and defines below the locking shelves an annular space for accepting lugs 220 and 224.

To connect the nozzle 30 to the aircraft fuel tank 250 an operator aligns the indexing notches 230, 232 and 234 of adapter 200 with the indexing pins 130, 132 and 134 on the nozzle body 32, and positions the locking lugs 220, 222 and 224 of adapter 200 within the locking slots 153, 154 and 155. As shown in Figure 13, a counter-clockwise rotation of the nozzle collar adapter 44 relative to the aircraft adapter 200 causes the locking lugs 220 and 224 to advance between the helical locking shelves 150, 151 and 152 and the lower shelf 156 to sealingly engage and lock the nozzle seal 102 to the aircraft adapter 200.

Referring to Figures 3, 8 and 13, the nozzle collar 34 includes a plurality of collar lock pins 140, 142 and 144, which index the nozzle collar 34 and the nozzle body 32 to prevent relative rotation prior to connection of the nozzle 30 to the aircraft adapter 200. As shown in Figure 3, the collar lock pins are located in the same annular cavity around seal 102 as indexing pins 130, 132 and 134. For example, lock pin 142 is mounted in a cavity 146 in the nozzle body 32. A collar lock pin spring 143 mounted within the cavity 146 below the collar lock pin 142 permits movement of the collar lock pin 142 within the cavity 146. The remaining collar lock pins 140 and 144 are mounted in the nozzle collar 34 in the same manner as is the collar lock pin 142. The collar lock pins 140, 142 and 144 are forced into the nozzle body 32 when the aircraft adapter 200, shown in Figure 13, is connected to the nozzle collar adapter 44 to allow the nozzle collar 34 to rotate relative to the nozzle body 32. The portion of each lock pin extending above its respective cavity comprises an upper portion which is narrower than the lower portion, as shown in Figures 3 and 13. Before engagement with adapter 200 the lower broader portion engages a corresponding recess in the inner face of lower shelf 156 in collar 34 (Figure 3). When the lock pins are forced downwards into their cavities by engagement with adapter 200 only the upper narrow portions of the pins project into the shelf recesses and are too small to engage that shelf so that the collar 34 is free to rotate.

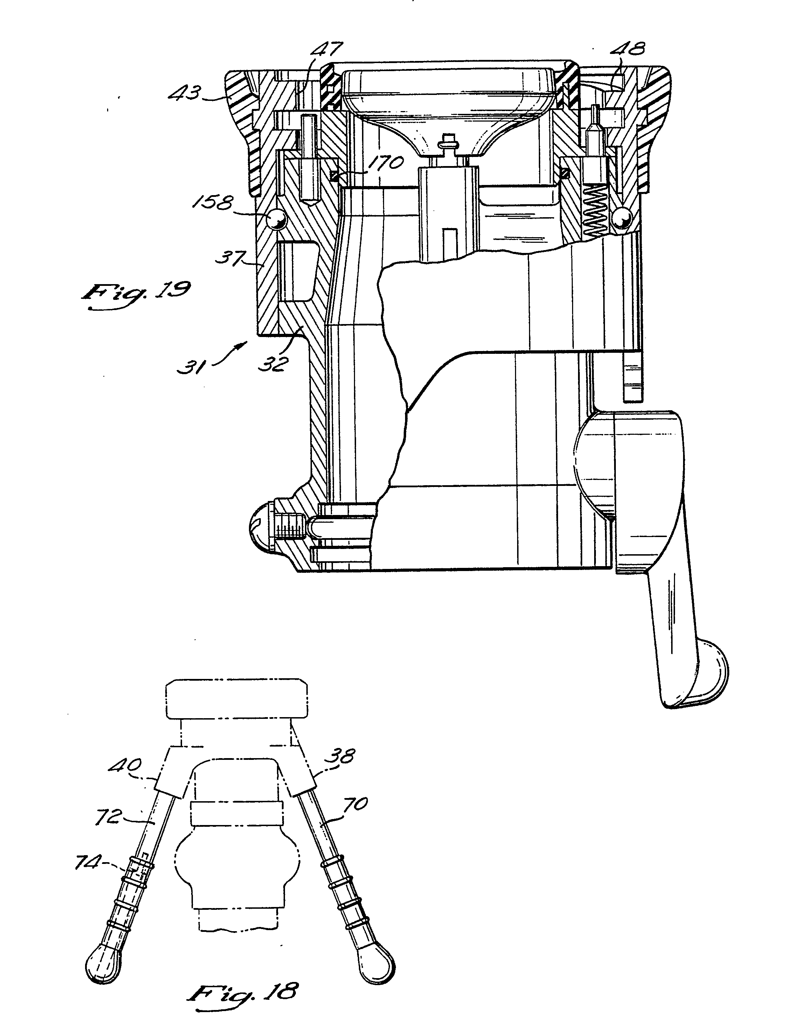

Referring to Figure 16, the aircraft adapter 200 includes an aircraft adapter poppet valve 210 which is urged toward a closed position by a spring 212 to seal against an annular shoulder 213 formed in the aircraft adapter 200.

Rotation of the crank handle 50 to turn the crank handle shaft 54 in a counter clockwise direction as shown in Figure 4 moves the nozzle poppet valve 100 to the open position and bears against the aircraft adapter poppet valve 210 to open valve 210 and permit introduction of fuel into the aircraft fuel tank 250.

As was mentioned above with reference to Figure 4, when the nozzle poppet valve 100 is fully open, the pad 81 on connecting link 90 contacts the stop 84 on the nozzle poppet shaft bearing 104 to prevent further counter-clockwise rotation of the crank handle shaft 54. After the connecting link 90 has gone over center, the force of the aircraft adapter spring 212 against the aircraft poppet valve 210 and the nozzle poppet valve 100 tends to force the pad 81 against the stop 84, holding the poppet valves 100 and 210 open. Therefore, the nozzle poppet valve 100 remains in the open position as shown in Figure 4 until a clockwise rotation of the crank handle shaft 54 causes movement of the crank link 90 to move the pad 81 away from the stop 84 to move the nozzle poppet valve 100, and therefore also aircraft poppet valve 210 under action of spring 212, toward the closed position.

As shown in Figures 3, 8 and 14-16, the fueling nozzle 30 of this invention may include a mechanical fuse 86 which permits separation of the nozzle collar adapter 44 from and the nozzle collar 34 upon the application of predetermined loads. In this embodiment, the nozzle collar adapter 44 and the nozzle collar 34 are separate pieces. The mechanical fuse 86 comprises a plurality of spring-biased detents 114 around the outside diameter of the nozzle collar 34. A preferred embodiment of the mechanical fuse 86 includes thirty-six substantially identical detents 114.

The detents 114 are positioned in a generally cylindrical annular cavities 89 in a detent ring 112 which fits between the nozzle collar adapter 44, the nozzle collar 34 and a collar bumper 42. Cavity 89 is shaped so that the detents will nest within it and may accept one or more detents. The detent ring 112 is affixed to the nozzle collar adapter 44 by any suitable means such as a plurality of screws 122. The geometry of the connection between the detent ring 112 and the nozzle collar adapter 44 ensures that the detents 114 remain with the nozzle collar adapter 44 after the mechanical fuse 86 functions to separate the nozzle collar adapter 44 from the nozzle collar 34. The cavities 89 are arcuately spaced about the circumference of the nozzle collar 34 as shown in Figures 3 and 8. In a preferred embodiment of the invention, the longitudinal axis of each cavity 89 makes an angle of 45° with the centerline of the nozzle body 34.

Referring to Figure 3, each detent 114 preferably includes an inner detent spring 116 and an outer detent spring 117, which is preferably concentric with the inner detent spring 116. As shown in Figures 3 and 8 each detent 114 has a generally cylindrical lower portion 111 and a frusto-conical upper portion having a chamfered surface 113. The frusto-conical upper portions of the detents 114 project from the cavities 89 to bear against retainer means such as a hardened steel wire 118 imbedded in an annular groove 121 around the nozzle collar 34.

The shape of the detents 114 and the wire 118 is such that normally all of the detents 114 are always bearing against the wire 118 to create a tight clamping force to retain the nozzle collar adapter 44 on the nozzle collar 34. It is preferable that the detents 114 bear only against the wire 118 and not against the outside diameter of the nozzle collar 34. In a preferred embodiment the chamfered surfaces 113 make angles of 45° with the longitudinal axes of the detents 114.

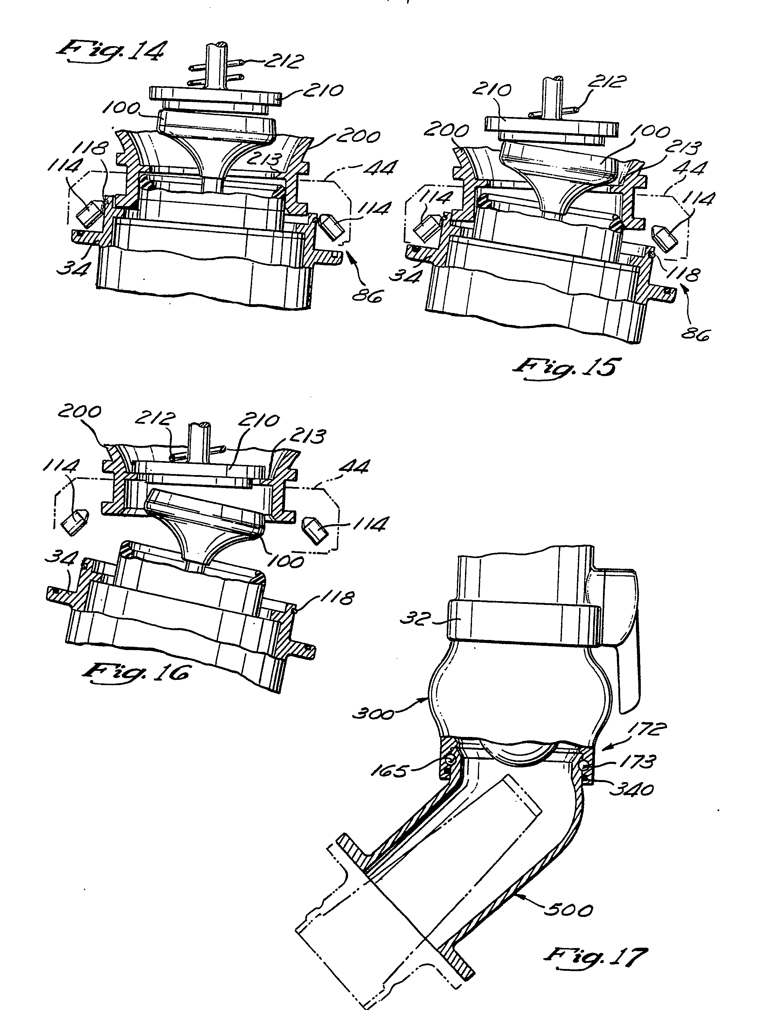

The detents 114 and the wire 118 permit predictable separation of the nozzle collar 34 and the nozzle collar adapter 44 upon the application of a predetermined axial load or a predetermined side load, or bending couple, to the nozzle 30. Figures 14-16 illustrate separation of the nozzle collar adapter 44 from the nozzle collar 34 in response to a side load. In functioning as a mechanical fuse mechanism, the detents 114 ride over the wire 118 by compressing the inner and outer detent springs 116 and 117, respectively, shown in Figure 3, to allow separation of the nozzle collar 34 and the nozzle collar adapter 44 upon the application of predetermined loads. Controlling the positions of the detents 114 on the wire 118 and choosing the detent inner spring 116 and the detent outer spring 117 to have selected force constants determines the break-away force of the mechanical fuse 86.

Referring to Figure 3, in order to ensure repeatable break-away forces, the mechanical fuse 86 is encapsulated between a pair of O-ring seals 120 and 124 and packed with a suitable lubricant. The O-ring 120 is in an annular groove 121 in the nozzle collar 34, and the O-ring 124 is in an annular groove 125 in the locking flange 44.

After a break-away, the nozzle collar adapter 44 remains connected to the aircraft adapter 200.

Figure 14 shows one of the detents 114, at the right of the Figure, beginning to ride above the wire 118 in response to a side load applied to cause a clockwise rotation in the Figure of the nozzle collar 34. Figure 15 shows the detent 114 being retained within the nozzle collar adapter 44 after the detent 114 has become disengaged from the wire 118.

As shown in Figure 16, while the nozzle collar adapter 44 is separated from the nozzle collar 34, the detents 114 are retained within the collar adapter 44. The nozzle poppet valve 100 remains with the nozzle body 32 and withdraws from the aircraft adapter 200. If the nozzle poppet valve 100 is in the open position when separation occurs, the aircraft adapter poppet valve 210 then closes against the aircraft adapter 200 to minimize fuel spillage from the aircraft fuel tank 250.

Since each detent 114 has a flat end face inclined relative to the longitudinal axis of the nozzle 30, release of the mechanical fuse 86 requires a progressively greater force to compress the inner and outer detent springs 116 and 117, respectively, so that the detents 114 will ride over the wire 118. As mentioned above, the force constants of the springs 116 and 117 are chosen such that a predetermined load causes the detents 114 to slide over the wire 118 as progressively greater loads are applied to compress the detent springs 116 and 117. At the predetermined release force the flat end face of one of the detents 114 slides off the wire 118, which is then in contact with the chamfer 113 on the face of the detent 114. The angles of the chamfers 113 are chosen such that the chamfers 113 slide over the wire 118 to offer little resistance to axial movement of the nozzle collar adapter 44 relative to the nozzle collar 34. The structure of the mechanical fuse 86 results in a gradual, controlled separation of the nozzle collar adapter 44 and the nozzle collar 34 until application of the predetermined release force to the mechanical fuse 86, at which time the mechanical fuse 86 rapidly releases.

Referring to Figure 3, the detents 114 have a desirable shape for cooperating with the selected force for separation. Within the specified required diametrical restrictions, the hollow cylindrical design of the detents 114 accommodates longer detent springs 116, 117 than is possible with a ball detent design (not shown). The 45° angles of the cavities 89 controls side loaded friction variations of the detents 114 against the walls of the cavities 89. The chamfer 113 on the faces of the detents 114 allows the accomplishment of a controlled separation test without complete disengagement and permits resetting of the detents 114 on the wire 118.

An add tional feature of the mechanical fuse 86 is that the release force may be adjusted by using wires 118 of various diameters, thereby adjusting the force required to compress the detents 114.

Assembly of the mechanical fuse 86 or resetting thereof to render the nozzle 30 serviceable after a release requires several sequential steps. The detent ring 112 with springs 116, 117 and detents 114 inserted but disassembled from the nozzle collar adapter 44 is connected to the nozzle collar 34 by simultaneous compression of all the detent springs 116, 117 to move the detents 114 outward past the outside diameter of the wire 118 and then installing the nozzle collar adapter 44 on the nozzle collar 34 and permitting the springs 116, 117 to expand to cause the detents 114 exert a clamping force on the wire 118. An indexing pin 75 (Figure 3) having tapered ends guides the detent ring 112 into position on the nozzle collar 34.

Figures 22 and 23 show the structure of an assembly fixture 602 which provides means for quickly and easily assembling the detent ring 112 and the detents 114 onto the nozzle collar 34. The assembly fixture 602 comprises a base 604, a detent washer 606 and a bolt 608. The base 604 has a threaded bore 610 sized to engage the bolt 608, which is inserted through the detent washer 606 into the bore 610. The base 604 is generally discoid with an upwardly projecting circumferential lip 612 extending from an end face thereof.

The lip 612 forms a cavity 613 having dimensions appropriate for closely fitting around the detent ring 112 to hold the detent ring 112 for compression of the detents 114 into the cavities 89. The bolt 608 has a head 614 which may be turned with a wrench (not shown) to urge the detent washer 606 against the detents 114. The detent washer has a chamfered surface 616, which is in contact with the ends of the detents 114. Threading the bolt 608 into the bore 610 draws the detent washer 606 closer to the base 604 and slides the detents 114 along the chamfered surface 616, thereby compressing the detents.

After the detents 114 are sufficiently compressed, a retainer ring 618 is connected to the detent ring 112 by any suitable means such as a screw 620. In actual practice a plurality of screws 620 may be used to secure the retainer ring 618 to the detent ring 112. A preferred embodiment shown in Figure 22 has six screws 620 arcuately spaced at 60° intervals around the retainer ring 618. The retainer ring 618 fits over the chamfered surfaces 113 of the detents 114 as shown in Figure 23 to retain the detents 114 within the cavities 89 after the compressive force of the detent washer 606 is released from the detents 114.

After the retainer ring 618 is secured to the detent ring 112, the bolt 608 is unthreaded from the base 604 so that the detent ring 112 may be placed over the nozzle collar 34 in the position shown in Figure 3. Assembly of the mechanical fuse 86 is completed by removing the screws 620 from the detent ring 112 to allow the detents 114 to move out of the cavities 89 a distance sufficient to press the ends of the detents 114 against the wire 118. The nozzle collar adapter 44 is attached to the detent ring 112 by a plurality of screws 122, best shown in Figure 3.

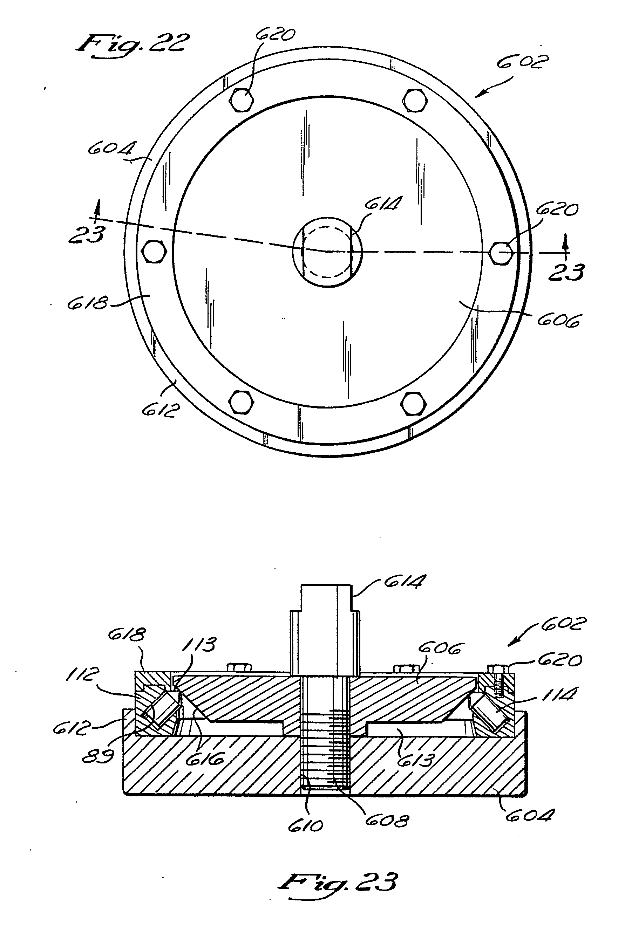

Referring to Figures 20 and 21, a test unit 550 for testing the mechanical fuse 86 includes an upper plate 552 mounted to a first support plate 554 by a pair of bolts 556 and 558 and mounted to a second support plate 560 by a pair of bolts 562 and 564. A pair of bolts 566 and 568 connects the support plate 554 to a lug 570 which engages a recess 572 in the nozzle collar 34. Similarly, a pair of bolts 574 and 576 connect the support plate 560 to a lug 578 which engages a recess 580 in the nozzle collar 34. Engagement of the lugs 570 and 578 in the recesses 572 and 580, respectively, retains the test unit 550 against axial movement and rotational movement relative to the nozzle 30 as the test unit 550 applies test forces to the mechanical fuse 86.

The test unit 550 further includes a test adapter 582 similar in configuration to the aircraft adapter 200 shown in Figure 13 for locking engagement with the collar adapter 44. A spacer 586 is positioned between the test adapter 582 and the upper plate 552. A recirculating ball screw 588 extends through a ball bearing assembly 590 in the upper plate 552 and through a passage 591 in the spacer 586 for threaded engagement with a ball nut 587. The ball nut 587 is connected to the test adapter 582 through the spacer 586 so that rotation of the ball screw 588 controls the movement of the ball nut 587 and the test adapter 582 between the nozzle 30 and the upper plate 522.

A plurality of bolts 596-598 are slidable through the upper plate 552. The bolt 596 extends through a threaded passage 599 in the spacer 586. The bolts 597 and 598 extend through similar passages (not shown) with the spacer 586 also being threaded to the bolts 597 and 598. As shown in Figure 21, the bolt 596 is adjustable and contacts the nozzle collar adapter 44 when the test unit 550 is connected to the nozzle 30.

A head 592 fixed to the recirculating ball screw 588 provides means for applying test forces to the mechanical fuse 86 through the recirculating ball screw 588 and the test adapter 582. Turning the head 592 with a calibrated torque wrench (not shown) urges the nozzle collar adapter 44 and the test adapter 582 away from the nozzle body 32 toward the upper plate 552 and permits reliable testing of the mechanical fuse 86. The gap 595 between the spacer 586 and the upper plate 552 limits the distance which the test adapter 582 may travel axially away from the nozzle collar 34 in response to test forces applied by the recirculating ball screw 588.

The chamfers 113 on the detents 114 allow the test unit 550 to move the detents 114 far enough to test the axial release force without causing complete separation of the nozzle collar 34 and the collar adapter 44. During the testing of the release force, it is generally desirable to avoid complete separation of the nozzle collar 34 and the collar adapter 44 to obviate the necessity of using the assembly fixture 602 to reassemble the mechanical fuse 86 after testing. Therefore, after the mechanical fuse 86 has been tested, the nozzle 30 may be placed in condition for use by rotating the recirculating ball screw 588 to force the detents 114 back over the wire 118 by means of force exerted through the bolts 596, 597 and 598.

The nozzle of the invention may include a pressure regulator 300, as shown in Figure 9. Pressure regulator 300 comprises a regulator housing 302, disposed upstream from the nozzle body 32. A swiveling assembly joint 172 preferably connects the regulator housing 302 between the nozzle body 32 and an upper disconnect half 430 of a quick disconnect assembly 400 which will be described in more detail below. The regulator housing 302 includes a male end 173 which projects into a female recess 174 in the inlet end of nozzle body 32. The male end 173 of the regulator housing 302 includes a semi-circular annular groove 175; and the female recess 174 in the nozzle body 32 includes a corresponding semi-circular groove 160 which aligns with the semi-circular groove 175 to form a ball race 159 when the swivel joint 172 is assembled. A passage 178 extends through the wall of the nozzle body 32 into the semi-circular annular groove 160 so that a plurality of ball bearings 158 may be inserted into the ball race 159 formed when the semi-circular annular groove 175 and 160 are in alignment as shown in Figure 9. To achieve a low coefficient of friction, the balls 158 are free rolling; and a seal 166 inside an annular groove 167 in the nozzle body 32 permanently protects the balls 158 from outside contamination. A plug 177 seals the passage 178 to retain the balls 158 within the ball race 159.

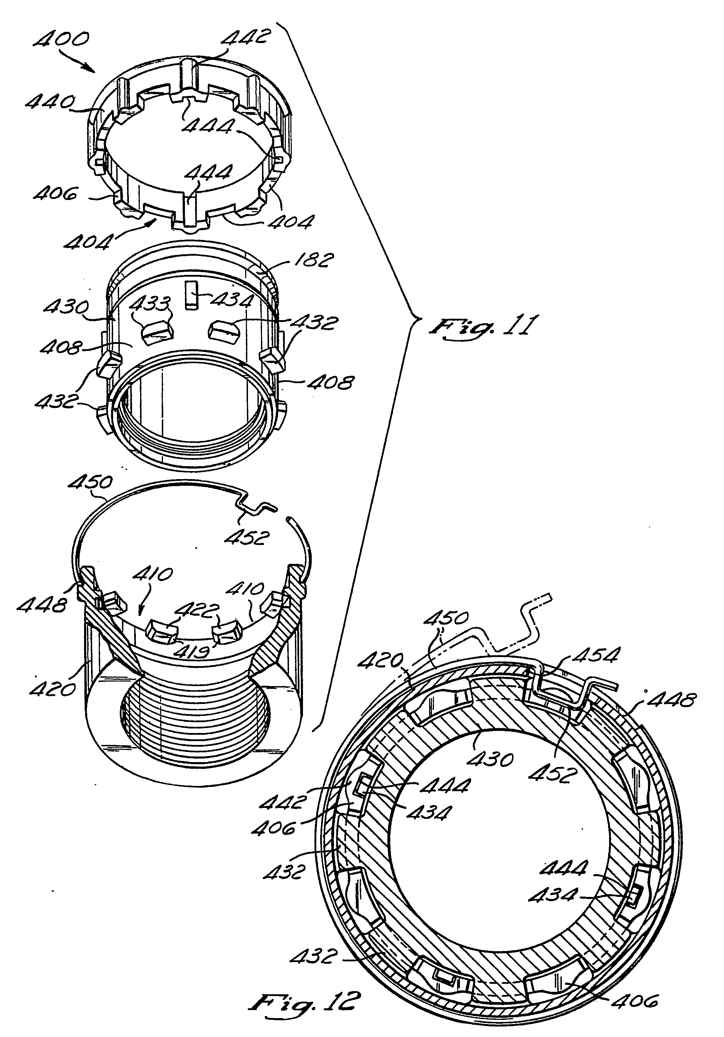

Referring to Figures 9 and 10, the pressure regulator 300 includes a sleeve valve 303 (seen best in Figure 10) connected to a regulator piston 310 by a plurality of webs 312. The regulator piston 310 is movable in a cylinder 304 formed in a piston housing 305. A piston spring 320 has a first end mounted in the piston housing 305 and a second end positioned within a recess 307 in the regulator piston 310. A vent 315 vents the recess 307 to ambient air pressure so that only the piston spring 320 and the fuel pressure cause substantial forces on the regulator piston 310. The piston spring 320 positions the regulator piston 310 to place the sleeve valve 303 in a bore 308 in the inlet end of the nozzle body 32. The webs 312 are positioned in the sleeve valve 303 to form a recess in the top of valve 303 so that the connecting link 90 and the eccentric link 80 nest within the sleeve valve 303 when the nozzle poppet valve 100 is in the closed position, which advantageously permits the length of the valve body 32 to be shorter than previous designs permit.

Support means, such as a pair of webs 309 and 311, support the piston housing 305 within the regulator housing 302. The piston housing 305 includes a cavity 313 which the vent 315 through the web 309 maintains at ambient pressure.

Under normal operating conditions, fuel flows through a filter screen 409 past the webs 309 and 311 of the piston housing and past the webs 312 of the sleeve valve 303 into the nozzle body 32. If excessive pressure develops in the nozzle body 32, fluid pressure on the regulator piston 310 forces the regulator piston 310 against the piston spring 320 which is compressed to allow piston 310 to move into the cavity 307 to decrease the distance between the sleeve valve 303 and the piston housing 305, thereby decreasing the rate of fuel flow into the nozzle 30. If the pressure inside the nozzle 30 attains a sufficiently high value, the regulator piston 310 moves into the cylinder 304 a distance sufficient to bring the sleeve valve 303 into contact with an O-ring 326 which a seal retainer 324 retains upon the piston housing 305. This contact closes off the passageway for the fuel through the pressure regulator housing 302 to the nozzle body 32. The seal retainer 324 also retains a seal 322, which maintains a seal between the regulator piston 310 and the piston housing 305. After the sleeve valve 303 sealingly engages the O-ring 326, no additional fuel flows into the nozzle 30. A seal 314, similar to the seal 470, is positioned in a groove 316 in the regulator housing 302 to prevent fuel leakage around the interface between the sleeve valve 303 and the inner wall of the regulator housing 302.

As the fuel pressure decreases within the nozzle body 32, the piston spring 320 moves the regulator piston 310 out of the cavity 307 to increase the distance between the sleeve valve 303 and the piston housing 313, thereby increasing the rate of fuel flow into the nozzle 30. Therefore, the pressure regulator 300 responds to pressure fluctuations in the nozzle body 32 by adjusting the fuel flow rate to regulate the pressure within the nozzle body 30.

The piston spring 320 is preferably made of a cryogenically treated stainless steel or a shot peened carbon steel, both of which permit the piston spring 320 to be shorter in length than would otherwise be possible.

The pressure regulator 300 may further include a spring biased check valve 328 positioned in a passage 329, which extends through the piston housing 305 to provide fluid communication between the inlet of the nozzle 30 and the fuel hose (not shown). The check value 328 includes a ball 330 which a spring 332 biases within the passage 329. Excessive fuel pressure in the nozzle 30 pushes the ball 330 against the bias of the spring 332 to permit fuel to flow back through the passage 332 until the fuel pressure in the nozzle returns to a predetermined safe level.

The swivel joint assembly preferably further includes a second swivel joint 172a between pressure regulator 300 and quick disconnect assembly 400, as shown in Figure 9.

Joint 172a includes a semi-circular annular groove 182 in the upper disconnect half 430 of the quick disconnect assembly 400 and a corresponding semi-circular annular groove 184 in the lower portion of the regulator housing 302 as shown in Figure 9. The semi-circular annular grooves 182 and 184 cooperate to form a ball race 185 in a manner similar to that in which the semi-circular annular grooves 175 and 160 cooperate to form the ball race 159. A passage 186 extends through the regulator housing 302 into the ball race 185 so that a plurality of ball bearings 161 may be inserted therein. A plug 164 retains the ball bearings 161 in the ball race 185. The O-ring 340 is preferably formed of a low friction substance such as polyurethane to further reduce rotational frictional forces between the quick disconnect assembly 400 and pressure regulator housing 302 in the swivel joint 172a. The outer surface of the male disconnect housing 430 under the ring 340 incorporates a Teflon slipper seal 350 positioned between a pair of O-rings 340 and 354 mounted in grooves 188 and 358, respectively, to provide low rotational sliding friction upon action of the swivel assembly. The Teflon slipper seal 350 is free to rotate and slide against the inner O-ring 354. The swivel joint 172a is substantially identical to the primary swivel joint 172 between the pressure regulator housing 302 and the nozzle body 32 and preserves the modular interchangeability of accessories to the advantage of weight and economy of construction.

In another embodiment of the invention, the nozzle may include a quick disconnect assembly 400 as shown in Figures 9 and 11. Assembly 400 comprises two tubular sections: a lower disconnect half 420 which mates with an upper disconnect half 430. The lower disconnect half is typically formed on one end of a straight pipe thread 402 as shown in Figure 9. The pipe threads may be of various sizes and are ordinarily connected to fuel delivery hoses (not shown) of various sizes and types.

Referring to Figure 11, the upper disconnect half 430 includes a plurality of lugs 432 projecting radially from the outer surface thereof, and the lower disconnect half 420 includes a plurality of mating lugs 422 projecting radially inward from the inner surface thereof. Connecting the upper disconnect half 430 to the lower disconnect half 420 requires axial movement of the upper disconnect half 430 relative to the lower disconnect half 420 so that the lugs 432 penetrate inside the lower disconnect half 420 between the mating lugs 422. After the lugs 432 are inserted in the lower disconnect half 420, relative rotation of the upper disconnect half 430 and the lower disconnect half 420 to align the lugs 432 with the mating lugs 422 connects the upper disconnect half 432 to the lower disconnect half 420. As shown in Figure 11, each of the lugs 432 preferably is cast with a pair of ramps 433 thereon; and similarly each of the lugs 422 includes a pair of ramps 419. The ramps 419 and 433 facilitate engagement of the lugs 432 and 422, respectively, to securely connect the upper and lower disconnect halves 430 and 420, respectively without the need for machining operations other than using a lathe to form the ramps 419 and 433.

The upper and lower disconnect halves 430 and 420, respectively, include no stops to limit rotational movement of the lugs 432 relative to the lugs 422. Therefore, the upper disconnect half 430 may be connected or disconnected to the lower disconnect half by rotation of the upper and lower disconnect halves 430 and 420, respectively in either direction in any of the eight indexing positions. As may be seen from Figure 11, a slight rotation is sufficient to align the lugs 432 and the mating lugs 422, which is advantageous for ease of operation in applications which require axial force as well as rotation for assembly.

In order to prevent inadvertent disconnection, the quick disconnect assembly 400 includes a castellated sleeve or locking ring 440 which retains the upper and lower disconnect halves 430 and 420, respectively against relative rotation. The castellated sleeve 440 is slidably mounted over the upper disconnect half 432. The castellated sleeve 440 includes a plurality of radial slots 404 on one end surface separated by a plurality of retaining lugs 406 to form the castellated shape. The outer surface of the sleeve 440 has longitudinal ribs 442 in alignment with lugs 406. Some or each of ribs 442 have an indexing slot 444 in alignment therewith and longitudinally located on the inner surface of sleeve 400. The upper disconnect half 430 includes a plurality of indexing ribs 434 extending from the outer circumference thereof. Slots 404 in sleeve 440 are arranged to slidingly accept ribs 434 when the quick disconnect assembly is assembled.

Referring to Figure 11, when the lugs 432 and the mating lugs 422 are in alignment to lock the upper and lower disconnect halves 430, 420, respectively, together, the castellated sleeve 440 is axially slidable along the upper disconnect half 430 so that its retaining lugs 406 and 442 fit into a plurality of slots 408 and 410 between the lugs 432 and the mating lugs 422, respectively of the two disconnect halves. The lugs 432 and mating lugs 422 fit inside the radial slots 404 of the castellated sleeve 440. The retaining lugs 406 and 442 and the radial slots 404 of sleeve 440 and the lugs 432, the mating lugs 420, and the slots 408 and 410 of the two disconnect valves therefore cooperate to provide means for retaining the upper and lower disconnect halves 430 and 420, respectively against relative rotation.

Figures 9 and 12 show the castellated sleeve 440 in a locked position. Referring to Figure 9, a circular stamped spring 460, retained by a snap ring 461 in a groove 412 on the outer circumference of the upper disconnect half 430, bears against the castellated sleeve 440 to hold it in position to retain the upper and lower disconnect halves 430 and 420, respectively, against relative rotation. Referring again to Figures 9, 11, and 12, a second locking device is embodied in a spring wire 450 which is mounted within a groove 448 around the lower disconnect half 420. The spring wire 450 has a tang 452 which extends radially inward through a slot 454 in the groove 448 through the lower disconnect portion 420. The tang 452 engages the male disconnect half 430 between the lugs 432 to also prevent relative rotation between the upper and lower disconnect halves 430 and 420, respectively.

In order to release the quick disconnect assembly, an operator lifts the tang 452 from the slot and slides the wire 450 in the groove 448 so that the tang 452 is disengaged from the male disconnect half 430 as shown in phantom in Figure 12. Next, the sleeve 440 is moved against the spring 460 upwardly out of engagement with the lugs 422 and 432. The operator may easily rotate the upper disconnect half 430 so that the lugs 432 are in alignment with the slots 410 between the mating lugs 422 of the female disconnect half 420, which permits relative axial movement of the upper and lower disconnect halves 430 and 420, respectively. A significant advantage of the swivel connection assembly 172 and the quick disconnect assembly 400 is that no tools are required to lock or unlock the quick disconnect assembly 400. A further advantage of the quick disconnect assembly are that there are no loose parts which could be misplaced while an operator is connecting or disconnecting the quick disconnect assembly 400. Still another advantage of the quick disconnect assembly is that the castellated sleeve 440 may conveniently be formed of injection molded plastic or die cast aluminum, both of which require no subsequent machining operations. The upper and lower disconnect halves 430 and 420, respectively, may also be conveniently formed of cast aluminum to include the lugs 432 and 422 with the ramps 433 and 419, respectively.

Referring to Figure 9, the quick disconnect assembly 400 further includes a face type seal 468, which comprises a U-shaped cup seal 470 positioned in an annular groove 472 in the lower disconnect portion 420. The U-shaped cup 470 seal exerts a sealing force on the upper disconnect half 430 and the lower disconnect half 420 which increases in relation to the fluid pressure within the nozzle 30. The U-shaped cup seal 470 is preferably injection molded of specially compounded polyurethane elastomer of 60 shore A hardness to minimize rotational friction.

A fuel filter 409 may be mounted in the upper disconnect half 430 as shown in Figure 9. The fuel filter 409 may conveniently be a suitable screen material 410 in a conical configuration with a base 411 being sealingly mounted to the upper disconnect half 430 by a ring 413 and a seal, such as an O-ring 415 and with the apex of the cone pointing downstream.

Figure 17 illustrates an alternative embodiment of the invention in which the direct connection of a pipe elbow 500 to the regulator housing 300 described above is shown without the quick disconnect assembly 400. The swivel joint 172 comprises a ball race 173 and a plurality of ball bearings 165 rotatably to mount the pipe elbow 500 to the regulator housing 300. Sealing means such as the O-ring 340 controls leakage around the mating faces of the pipe elbow 500 and the regulator housing 300.

Figure 19 illustrates another embodiment of the invention in which the nozzle 31 does not include the mechanical fuse 86 shown in Figures 3, 8 and 14-16. The nozzle 31 of Figure 19 includes the same nozzle body 32 as does the nozzle 30 described with reference to Figures 1-18 and it will be appreciated that much of the

-31-

description of nozzle 30 applies to nozzle 31. The nozzle 31 includes a nozzle collar 37 which is rotatably mounted to the nozzle body 32. The ball bearings 158 facilitate rotation of the nozzle collar 37 relative to the nozzle body 32. The nozzle collar 37 includes shelves 47 and 48 similar to the shelves 150, 152 and 154 for attaching the nozzle collar 37 to the aircraft adapter 200 of Figure 13.

A nozzle collar bumper 43 is mounted around the outside of the nozzle collar 37. The nozzle collar bumper 43 is preferably formed of a resilient material to provide means for absorbing forces applied to the nozzle 31 during use thereof.

0117702

-32-

WHAT IS CLAIMED IS:

1. A nozzle assembly for attachment to a fluid supply line comprising:

(a) a nozzle body comprising an inlet end and an outlet end;

a nozzle collar adapter connected to said outlet end for connecting said nozzle assembly to said fuel tank; and

a mechanical fuse for permitting separation of said nozzle collar adapter from said nozzle body upon application of predetermined release load to said nozzle assembly;

(b) a nozzle valve, for controlling the flow of said fluid from said outlet end of said nozzle assembly;

a nozzle valve shaft connected to said valve and axial to said nozzle body; and

a sleeve bearing through which said shaft extends, said bearing having a slot therein; and

a linkage for controlling the axial position of said shaft, said linkage comprising a reciprocable connecting link movable within said slot as said valve shaft moves axially relative to said nozzle body;

(c) a pressure regulator comprising a housing having an inlet end and an outlet end, said outlet end being connected to said inlet end of said nozzle body;

a valve mounted in said pressure regulator housing, said valve being movable between an open position and a closed position in response to changes in fluid pressure in said nozzle assembly to control the flow rate of fluid through said housing and to control the fluid pressure in said nozzle body; and

means for biasing said pressure regulator valve towards said open position with a predetermined force; and

(d) a coupling, for connection to or disconnection from said fluid supply line, said coupling comprising first and second generally tubular sections rotatable with respect to each other for said connection and disconnection, said coupling further comprising means for selectively preventing said rotation and consequently said disconnection.

2. A nozzle for supplying fuel to a fuel tank comprising:

a nozzle body comprising an inlet end and an outlet end;

a nozzle collar adapter connected to said outlet end for connecting said nozzle assembly to said fuel tank; and

a mechanical fuse for permitting separation of said nozzle collar adapter from said nozzle body upon application of predetermined release load to said nozzle assembly.

3. A nozzle for supplying fuel to a fuel tank comprising:

a nozzle valve, for controlling the flow of said fuel from said nozzle assembly;

a nozzle valve shaft connected to said valve and axial to said nozzle body; and

a sleeve bearing through which said shaft extends, said bearing having a slot therein; and

a linkage for controlling the axial position of said shaft, said linkage comprising a reciprocable connecting link movable within said slot as said valve shaft moves axially relative to said nozzle body.

4. A nozzle for supplying fuel to a fuel tank comprising:

a pressure regulator housing having an inlet end and an outlet end, said outlet end being connected to said inlet end of said nozzle body;

:v

a valve mounted in said pressure regulator housing, said valve being movable between an open position and a closed position in response to changes in fluid pressure in said nozzle assembly to control the flow rate of fuel through said housing and to control the fluid pressure in said nozzle body; and

means for biasing said pressure regulator valve towards said open position with a predetermined force.

5. A nozzle for supplying fuel to a fuel tank comprising:

a coupling, for connection to or disconnection from said fuel supply line, said coupling comprising first and second generally tubular sections rotatable with respect to each other for said connection and disconnection, said coupling further comprising means for selectively preventing said rotation and consequently said disconnection.

6. A nozzle as claimed in Claim 2, 4, or 5, further comprising:

a nozzle valve, for controlling the flow of said fuel from said nozzle assembly;

a nozzle valve shaft connected to said valve and axial to said nozzle body; and

a sleeve bearing through which said shaft extends, said bearing having a slot therein; and

a linkage for controlling the axial position of said shaft, said linkage comprising a reciprocable connecting link movable within said slot as said valve shaft moves axially relative to said nozzle body.

7. A nozzle as claimed in Claim 2 or 5, further comprising:

a pressure regulator housing having an inlet end and an outlet end, said outlet end being connected to said inlet end of said nozzle body;

a valve mounted in said pressure regulator housing, said valve being movable between an open position and a closed position in response to changes in fluid pressure in said nozzle assembly to control the flow rate of fuel through said housing and to control the fluid pressure in said nozzle body; and

means for biasing said pressure regulator valve towards said open position with a predetermined force.

8. A nozzle as claimed in Claim 2, further comprising:

a coupling, for connection to or disconnection from said fuel supply line, said coupling comprising first and second generally tubular sections rotatable with respect to each other for said connection and disconnection, said coupling further comprising means for selectively preventing said rotation and consequently said disconnection.

9. A nozzle as claimed in Claim 7 or 8, further comprising:

a nozzle valve, for controlling the flow of said fuel from said nozzle assembly;

a nozzle valve shaft connected to said valve and axial to said nozzle body; and

a sleeve bearing through which said shaft extends, said bearing having a slot therein; and

a linkage for controlling the axial position of said shaft, said linkage comprising a reciprocable connecting link movable within said slot as said valve shaft moves axially relative to said nozzle body;

10. A nozzle as claimed in Claim 8 further comprising:

a pressure regulator housing having an inlet end and an outlet end, said outlet end being connected to said inlet end of said nozzle body;

a valve mounted in said pressure regulator housing, said valve being movable between an open position and a closed position in response to changes in fluid pressure in said nozzle assembly to control the flow rate of fuel through said housing and to control the fluid pressure in said nozzle body; and

means for biasing said pressure regulator valve towards said open position with a predetermined force.

11. A nozzle as claimed in any of Claims 1, 2 or 6 to 10 wherein said nozzle collar adapter forms one or more cavities around said outlet and of said nozzle body, said cavities containing a plurality of detents which bear against a retaining surface around said nozzle, said detents being urged against said surface by biasing means which, in combination with frictional force between said detents and said surface, ·provides a predetermined resistive force to be overcome by said release load causing said detents to ride over said retaining surface and thereby to allow separation of said nozzle collar adapter from said nozzle.

12. A nozzle as claimed in Claim 11, wherein said biasing means comprises a spring inside each of said detents.

13. A nozzle as claimed in Claim 11 or 12 wherein said biasing means comprises a spring external to each of said detents.

14. A nozzle as claimed in any of Claims 11 to 13 wherein said detents have a generally cylindrical shape with a tapered end for bearing against said retainer surface.

15. A nozzle as claimed in any of Claims 11 to 14 wherein said retainer surface comprises a wire located in a groove around said nozzle collar.

16. A nozzle as claimed in any of Claims 1, 3, 6 to 9 wherein said connecting link is connected to an eccentric link which, in turn, is connected to means for rotating said eccentric link to move said nozzle valve shaft within said nozzle valve shaft bearing to control the position of said nozzle valve.

17. A nozzle as claimed in Claim 16, wherein said eccentric link is connected to said rotating means by fastening means which, under fluid pressure in the nozzle when said nozzle valve is closed, bears against said connecting link to resist opening of said nozzle valve.

18. A nozzle as claimed in Claim 16 or 17 wherein said means for rotating said eccentric link comprises a crank shaft connected to a crank handle outside said nozzle body.

19. A nozzle as claimed in any of Claims 16 to 18, wherein said connecting link includes a stopping surface for contacting the interior of said nozzle valve shaft bearing to limit movement of said valve shaft and said nozzle valve.

20. A nozzle as claimed in any of Claims 1, 4, 6, 7, 9 or 10 wherein said pressure regulator is connected immediately upstream of said nozzle body and said pressure regulator valve comprises a sleeve valve having a concave end adjacent said nozzle body for nesting the nozzle valve linkage, as defined in any of Claims 1,3, 6 to 9 and 16 to 19.

21. A nozzle as claimed in any of Claims 1, 4, 6, 7, 9 to 10 or 20, wherein said pressure regulator is rotatably connected to said nozzle body.

22. A nozzle as claimed in Claim 20 or 21, wherein said pressure regulator includes a check valve, normally biased to a closed position, for relieving excess pressure in said regulator and nozzle when said pressure regulator valve is closed by venting fluid in the direction from said outlet end of said regulator to said inlet end of said regulator.

23. A nozzle as claimed in any of Claims 1, 5, 6, 7, 9 or 10, wherein said first tubular section in said coupling has a plurality of lugs extending from the outer surface thereof and wherein the second tubular section has a plurality of lugs extending from the inner surface thereof, said lugs being spaced apart so that the lugs of one section may pass between the lugs of the other section upon connection of the sections in a direction axial to the nozzle, the sections being rotatable with respect to each other for the lugs of one section to align with and engage the lugs of the other section to prevent disconnection in said axial direction.

24. A nozzle as claimed in Claim 23, wherein said means for selectively preventing rotation of said sections comprises a castellated sleeve slidably mounted around said first section, said sleeve having a plurality of retaining lugs which, in a locking position of said sleeve, extend into spaces between said aligned lugs on said sections to prevent relative rotation of said sections.

25. A nozzle a claimed in Claim 24, wherein said coupling further comprises means for biasing said sleeve into said locking position.

26. A nozzle as claimed in Claim 24 or 25, wherein at least some of said retaining lugs on said sleeve include a slot for engaging corresponding projections on said first section to prevent relative rotation of said sleeve when in said locking position.

27. A nozzle as claimed in any claims 23 to 26, wherein said second section comprises an external spring having a tang for projection into a space between said aligned lugs on said sections to retain said first section against rotation relative to said second section.

28. A fixture for assembling a nozzle which includes a mechanical fuse comprising a plurality of spring-biased detents mounted in a detent ring, comprising:

a base, said base including means for holding the detent ring;

a detent washer for engaging the detents;

means for urging said detent washer toward said base to compress the detents; and

means for holding the detents in compression and for engaging the detents with a retainer in the nozzle.

29. A fixture as claimed in Claim 28, wherein said base includes a threaded bore and said detent washer includes a washer bore for alignment with said threaded bore and wherein said urging means comprises a bolt for advancement within said threaded bore.

30. A fixture as claimed in Claim 28 wherein said holding and engaging means comprises a retainer ring and means for demountably coupling said retainer ring to said detent ring.

31. A method for assembling a mechanical fuse in a nozzle which includes a plurality of spring biased detents mounted in a detent ring comprising the steps of:

holding the detent ring on a base;

placing a detent washer adjacent the detents;

urging the detent washer toward the base to compress the detents;

holding the detents in compression;

positioning the compressed detents adjacent a retainer in the nozzle; and

releasing the compression of the detents to allow the detents to engage the retainer.

32. A fixture for testing a mechanical fuse in a nozzle having a nozzle adapter portion shaped for connection to a fluid-receiving vessel and a flow control portion for controlling the rate of fluid flow into the vessel, the mechanical fuse comprising a plurality of spring biased detents for permitting separation f said nozzle adapter portion and said flow control portion upon application of a predetermined release load, said fixture comprising:

a test adapter shaped for locking engagement with the nozzle adapter portion; and

-40-

means for applying predetermined test forces to the test adapter to urge said test adapter away from the flow control portion of the nozzle, thereby compressing the spring biased detents, without causing a complete separation of the nozzle adapter portion and the flow control portion.

33. A fixture as claimed in Claim 32, wherein said means for applying test forces comprises:

a plate;

means for fixing said plate to the flow control portion of the nozzle;

means, connected to said test adapter, for urging said test adapter toward said plate; and

means for limiting axial movement of said test adapter away from the flow control portion to prevent complete separation of the mechanical fuse.

34. A method for testing a mechanical fuse in a nozzle having a nozzle adapter portion shaped for connection to a fluid receiving vessel and a flow control portion for controlling the rate of fluid flow into the vessel, the mechanical fuse comprising a plurality of spring biased detents for permitting separation of the nozzle adapter portion and the flow control portion upon application of a predetermined release load, said method comprising the steps of:

engaging a test adapter with the nozzle adapter portion of the nozzle;

applying predetermined test forces to the test adapter to urge the test adapter and the nozzle adapter portion away from the flow control portion to determine the force required to compress the detents; and

limiting axial movement of the test adapter away from the flow control portion to prevent complete separation of the mechanical fuse.

0117702

1/9

Fig.1

Fig.2

Fig.3

0117702

Fig. 5

Fig. 7

Fig. 4

Fig. 6

0117702

S/9

**Fig.8**

**Fig. 10**

**Fig.9**

400
442
440
444
444
406
404
404

182
430
433
434
432
408
432
408

450
452
410
448
410
422
419
420
420

450
454
420
448
452
430
442
444
434
406
432
444
434
432
406

*Fig. 11*

*Fig. 12*

250

234

224

230

220

232

200

156

153

152

151

142

155

102

132

44

144

134

104

130

140 150

154

34

30

*Fig. 13*

Fig.14

Fig.15

Fig.16

Fig.17

0117702

$\frac{7}{6}$

Fig. 19

Fig. 18

49/49

Fig. 21

Fig. 20

Fig. 22

620  602

604

614

23  620

23

618  606

612

Fig. 23

614

618  113  606  602

112  620

612  114

89  616  613

610  608  604